# EUROPEAN PATENT SPECIFICATION

(11) **EP 1 377 000 B1**
(45) Date of publication and mention of the grant of the patent: **22.04.2009**
(21) Application number: 03101706.4
(22) Date of filing: 11.06.2003
(51) Int. Cl.: H04M 3/493, G10L 15/22

(54) **Method used in a speech-enabled automatic directory system**
Verfahren, angewandt in einem sprachgesteuerten automatischen Rufnummernauskunftsystem
Procédé mis en oeuvre dans un système annuaire automatique actionné par la parole

(30) Priority: 11.06.2002 EP 02012944
(43) Date of publication of application: 02.01.2004
(73) Proprietor: Swisscom (Schweiz) AG, 3050 Bern (CH)
(72) Inventor: van Kommer, Robert, 1752, Villars-sur-Glâne (CH); Marti, Urs-Viktor, 3018, Bern (CH)
(74) Representative: P&TS Patents & Technology Surveys SA

(56) References cited:
- EP-A- 0 651 372
- EP-A- 0 763 816
- US-A- 5 644 680
- US-A- 5 675 706
- US-B1- 6 173 266
- KAMM C A ET AL: "Speech recognition issues for directory assistance applications" SPEECH COMMUNICATION, ELSEVIER SCIENCE PUBLISHERS, AMSTERDAM, NL, vol. 17, no. 3, 1 November 1995 (1995-11-01), pages 303-311, XP004001044 ISSN: 0167-6393

## Description

### Field of the invention

The present invention concerns a method used in a speech-enabled automatic directory system, in particular a method for determining a fallback threshold.

### State of the art

Automatic directory services are about to be launched by many telecommunication companies. In those services, a speech recognition system is used for recognising the queries submitted by the callers, and a speech synthesis system speaks the answers to those queries. The queries usually include free text questions asking, for example, the phone number of a specific person at a specific place, or for retrieving a name and address on the basis of a known phone number.

Current automatic speech-enabled directory services commonly use spoken words directly. The common dialogue structure could be: to ask the town name, then the surname, and finally, the first name; after confirmation of the recognized names with the caller, the requested telephone number is supplied. This dialogue structure could also use a mixed initiative dialogue in which the user could utter two or more information fields or slots in the same sentence. Then the search mechanism used is the so-called N-Best; that is, for each entry the recognizer generates a list of best-matched names and an associated confidence measure (for example a value between 0 and 100% that defines the confidence the recognizer attributes to its recognized item). And finally, the best match is found among these N-Best lists on the basis of the confidence measure.

Despite impressive progress made during recent years, most automatic directory services still rely on a fallback method. In those systems, when a name in a query cannot, or not reliably, be recognised, access is given to another type of queries recognition system. The purpose is to avoid a user becoming trapped in an automated speech recognition system without succeeding in getting his/her answer or in getting the task done.

In many call center systems where the quality of service prevails over the cost savings allowed by automated systems, the fallback implies giving access to a human operator when the speech recognition system does not perform reliably. However, having a large amount of incoming calls handled by human operators obviously has a very negative economic impact, so that a fallback decision should only be taken as a last option.

Automatic directory services have also been suggested where the caller is asked to repeat or to spell his query, or a name in his query, when the recognition rate is not sufficient. Spelling allows the name recognition to be made easier especially in certain cases where only the written form of the name renders the directory entries unambiguous. However, accurate spelling of names is not always known, and from a usability perspective, it is not the preferred interaction means. Clearly, repeating or spelling a word is a time-consuming and annoying operation.

For those reasons, irrespective of the fallback system that is used, fallback decisions should be taken carefully; the cheapest, fastest and user-friendliest recognition system is almost always the system used in first instance.

In existing automated directory systems, a fallback decision is taken by said directory system when some kind of metric delivered by the speech recognition system has a predefined relation with a predefined threshold. In the simplest systems, the metric is simply a binary flag that is marked when the speech recognition is unable to perform its task. In more sophisticated systems, the metric indicates in some way the reliability of the hypotheses output by the speech recognition system.

The rate of calls or queries for which the fallback system is activated obviously strongly depends on the threshold that has been set. If the threshold is too low, the fallback system will be used even in cases where it may not have been necessary. However, if the threshold is too high, unreliable and false hypotheses would be delivered by the system.

In existing systems, the fallback threshold is arbitrarily set, based on the experience of the designer of the speech recognition system.

In US-A-5,644,680 a method and an apparatus for at least partially automating a telephone directory assistance function is disclosed. The directory assistance callers are prompted to speak locality or called entity names associated with desired directory listings. A speech recognition algorithm is applied to speech signals received in response to prompting to determine spoken locality or called entity names. Desired telephone numbers are released to callers, and released telephone numbers are used to confirm or correct at least some of the recognized locality or called entity names. Speech signal representations labelled with the confirmed or corrected names are used as labelled speech tokens to refine prior training of the speech recognition algorithm.

In the speech recognition system according to EP-A-0 763 816, a recognition processor receives an unknown utterance signal as input. The recognition processor in response to the unknown utterance signal input accesses a recognition database and scores the utterance signal against recognition models in the recognition database to classify the unknown utterance and to generate a hypothesis speech signal. A verification processor receives the hypothesis speech signal as input to be verified. The verification processor accesses a verification database to test the hypothesis speech signal against verification models reflecting a preselected type of training stored in the verification database. Based on the verification test, the verification processor generates a confidence measure signal. The confidence measure signal can be compared against a verification threshold to determine the accuracy of the recognition decision made by the recognition processor.

US-A-5 675 706 discloses a verification system to determine unknown input speech contains a recognized keyword or consists of speech or other sounds that do not contain any of the keywords.

### Summary of the invention

It is therefore an aim of the invention to determine a more adequate or optimal fallback threshold than the thresholds used in conventional systems.

It is another aim of the invention to determine a threshold that is better adapted to the service provided, to the set of possible users, and/or to the lexica of expected queries.

Another aim of this invention is to find an optimal dialogue that enables the user to obtain the telephone number, email address, street address, profession, SIP (Session Initiation Protocol) phone number for VolP call, or web address, while minimizing the error rate and the usability drawbacks.

The invention is based on the finding that a standard fallback threshold is not optimal for all situations; some services or some users could accept a higher false acceptance rate, whereas a higher rate of use of the fallback system may be acceptable in other circumstances. Furthermore, the fallback threshold preferably depends on the importance of an accurate recognition, on the expected interactivity and on the difficulty of the speech recognition (quality of the available audio material, size of the lexica, time spent for the training, and so on). Those parameters are not identical in all services and user expectations also differ.

It is another aim of the invention to propose a new way of setting the fallback threshold.

According to the invention, the method used in a speech-enabled automatic directory system for determining a fallback threshold according to the preamble of claim 1 is **characterised in that** said fallback threshold depends on at least one of the followings:
name in the lexica of words recognised by said speech recognition system,
   user,
   group of user,
   user settings,
   location of the user,
   type of equipment used by the user,
   a-priori knowledge about the user,
   queries from previous dialogue elements,
   probability to have a name being requested,
   previous dialogue turns.

This has the advantage that the threshold that is determined depends on the users, on the names uttered by the users, and on the tolerable false acceptance rate. Thus, a more optimal threshold can be defined for the speech recognition system.

According to another aspect of the invention, the method used by speech-enabled automatic directory systems to determine an optimal threshold for the confidence value delivered by a speech recognition system, said threshold being used by a dialogue manager to decide if spelling of a name uttered by a user of the system and analysed by said speech recognition system is required, comprises the following steps:
collecting speech data corresponding to names uttered by users, running said speech recognition system over this speech data,
determining the false acceptance rate for various thresholds of confidence level delivered by said speech recognition system,
finding a trade-off between said confidence level and said false acceptance rate.

In a preferred embodiment, the metric compared with the threshold is the confidence level, which is a value delivered by many existing speech recognition systems. Thus, computation of this metric does not require any supplementary software or hardware resources.

As one will understand, the automated directory system of the invention can be used for retrieving any kind of addresses or information, such as information available in phone books, in white or yellow pages, SIP addresses, web addresses, email addresses, etc.

According to another aspect of the invention, the fallback method used by the automated directory system of the invention uses a multimodal interaction with the user of the system. In an embodiment of the invention, the interaction implies that the user enters on a keypad at least the first letters of the unreliably recognised name in his query. In another embodiment, the interaction implies that the user selects the requested name within a displayed or spoken list of best matches, whereas the selection can be entered with a keypad or another kind of hand-operated input device. In yet another embodiment, the first letters, or another identification, of the selected name in a displayed list of best matches are spelled by the user, whereas the displayed list is preferably updated after each letter.

### Brief description of the drawings

The invention will be better understood with the help of the description of a specific embodiment illustrated by the figures in which:
Fig. 1 illustrates the general structure of a speech recognition system according to the invention.
Fig. 2 is a flow chart illustrating a dialogue where a spelling fallback decision is taken.
Fig. 3 is a flow chart illustrating the offline fallback determination method of the invention.

### Preferred embodiment of the invention

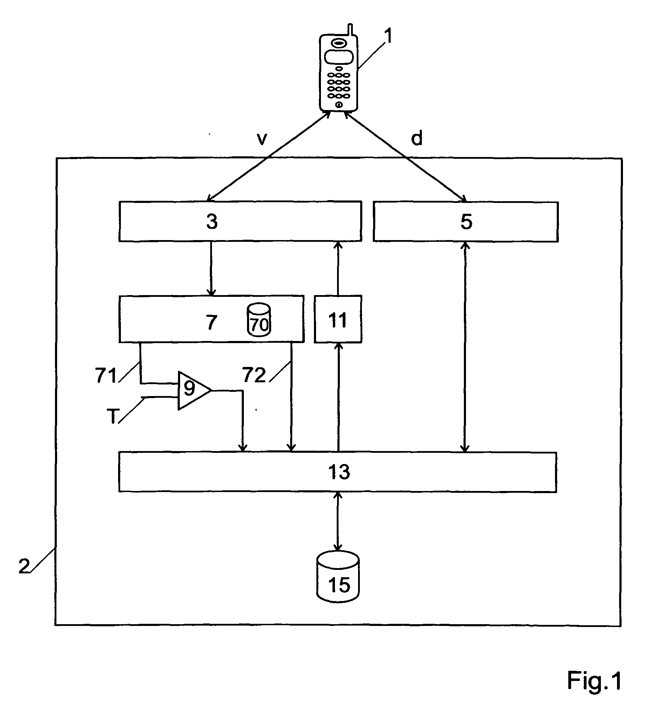

Fig. 1 illustrates the main component of an automatic directory system according to the invention. The system comprises a platform 2 run by the provider of the directory service, for example by a telecommunication network operator, and which can be run on one or several servers. A plurality of telephone equipment users 1 can establish with the platform 2 a bidirectional voice communication v and a simultaneous bidirectional data communication d, for example over a public switched telephony network, over a mobile phone network, over the Internet, etc. In an embodiment, the voice communication is established over the voice channel of a mobile network such as a GSM or UMTS network whereas the data d travel over a data channel or by carriers available in this network, for example by SMS, USSD or according to the WAP (Wireless Application Protocol) or l-mode protocol. In another embodiment, the voice communication is established over an ISDN public telephony network and the data travel over a data channel through the same network. In yet another embodiment, the voice and data are both split in packets transported over a packet based communication network such as the Internet.

The platform 2 comprises an interface 3 for the telephone voice network and an interface for the data network. In an embodiment, the voice interface comprises a modem whereas the data interface may comprise a data message processing system, such as a computer application for receiving or sending SMS, USSD or e-mails.

A speech recognizer 7 processes the voice dialogue elements received from remote users 1 and converts them into text elements. The voice recognizer may be based on Hidden Markov Models (HMMs), on neuronal networks or on a mix. A speaker-independent recognition system would preferably be used, although speaker-dependent systems could be a more efficient alternative for systems frequently accessed by the same users and when reliable caller identification is possible.

In another embodiment, the recognizer, or at least components of the recognizer, are implemented in the user's equipment. This would allow to reduce the communication costs and to increase the interactivity, in particular when a fast recognition and feedback is required, for example for spelling letters. Implementing the recognizer, or components of the recognizer, in the user's equipment further allows a faster and better adaptation of the speech and language models to the user. Furthermore, the available bandwidth in the local equipment is usually higher than what is sent to a remote platform.

In a preferred embodiment, complex recognition tasks, such as the recognition of complete names and sentences, is performed by a remote platform whereas easier recognitions tasks that require a faster interactivity, such as the recognition of spelled letters, is performed locally. A drawback of the local recognition is however that different recognition software has to be written for all types of equipment operating systems available (such as Symbian and others).

For each name received in a query from the user 1, the speech recognizer 7 in the plattform 2 and/or in the user's equipment delivers one or more hypotheses, i.e. the best match or best matches found in lexica 70 of names. Along with this hypothesis 72, the speech recognizer preferaby delivers a metric 71 that indicates in some way the "quality" or reliability of the delivered result. In one embodiment, the metric is a confidence level and indicates with a number from 0 to 100 the recognizer's confidence in its result. This confidence level may be computed as a normalized product of the log probabilities of each triphone in the delivered hypothesis divided by the number of triphones in the hypothesis. In another embodiment where the speech recognizer 7 uses a plurality of support vectors associated with each name in the lexica 70, the metric 71 is based on a discriminant function of each uttered name and of each associated support vector.

The platform 2 of the invention further comprises comparing means 9 for testing a relation between the metric or metrics delivered by the speech recognizer 7 and a threshold T determined during the initialisation of the system. As one will see later, according to the present invention different thresholds T will be defined for different names or for different users.

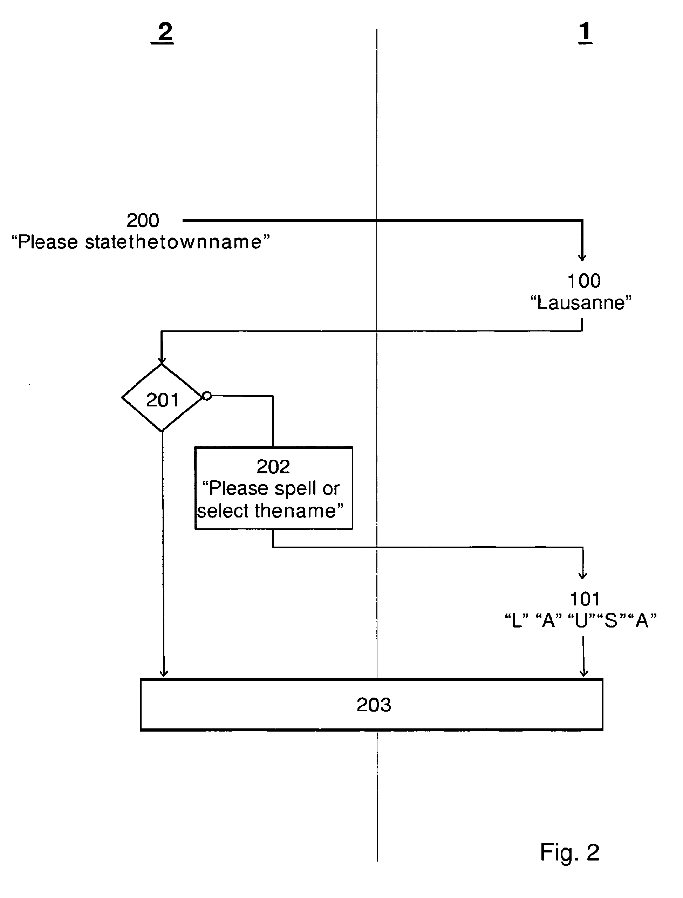

A dialogue manager 13 is provided for answering the users' queries 72 and establishing a dialogue strategy. An example of dialogue will be described later in relation with Figure 2. The dialogue is dynamically constructed, given the level of confidence (metric 71) indicated by the voice recognition system (recognizer) and its relation to the predefined threshold T. Answers to recognized queries can be extracted from a directory database 15 operated in the platform 2 or by an external server.

Answers from the dialogue manager 13 are converted to speech by a text-to-speech converting system 11 and spoken to the user 1 over the telephone network voice interface 3 and the telephone network.

In a preferred embodiment, a multimodal communication can be established between the dialogue manager 13 in the platform 2 and the users 1 over an interface 5. In this case, the user 1 can interact with the platform 2 by typing letters or names on his equipment keypad, or by selecting options in a menu, whereas the dialogue manager 13 can send messages or data shown on the display of the user's equipment. As mentioned, the data communication d can be based for example on SMS, USSD and/or WAP in a mobile telephone system, whereas it has to be ensured that the mobile network and the mobile equipment both support simultaneous voice and data communication.

Fig. 2 illustrates a dialogue example between a remote user 1 and the platform 2. During step 200, the automated directory service answers the user's call by asking the town name of the requested subscriber. At this point, the speech recognizer 7 in the platform 2 or partly in the user's equipment 1 activates only the part of the lexica 70 that contains the names of towns. User 1 answers this prompt by speaking the name *Lausanne* during step 100.

During step 201, the recognizer 7 performs the recognition of the spoken answer and determines at least one hypothesis 72, for example one best match among the list of towns in the lexica 70. The recognizer 7 simultaneously delivers a metric 71 that indicates its confidence in the delivered hypothesis. The comparing means 9 then compares the relation between this metric 71 and a threshold T predefined during the tuning of the system. If the metric 71 has a first relation with the threshold T, for instance if the confidence level is higher than a threshold, then the dialogue manager accepts and preferably confirms ("*Do you mean Lausanne in Switzerland?"*) this answer during step 203. The single recognized name is preferably also displayed on the user's equipment. In the other case, when the confidence level or metric 71 delivered by the speech recognizer 7 has another relation to the threshold T, the fallback option would be selected (step 202). In an example, the user 1 would be asked during this option to spell the name of the requested town: "*Could you please spell the name of the town?*" In a preferred embodiment, the best, or the N-best, hypotheses are sent over the data channel d to the user's equipment 1 and displayed to the user. The user 1 answers during step 101 by spelling at least the first letters of the name ("**LAUSAN**"); the spelled letters are recognized locally or remotely, and preferably displayed to the user which can correct possible errors of the recognizer. The recognizer optionally barges in on the user as soon as the name of the town has been recognized with a sufficient reliability, or when all ambiguities have been removed by the spelling. In another example, the user 1 would be requested to type on the keypad of his telephone equipment the name, or the first letters of the name, or to select this name with a stylus or other input device in the list of N-best hypotheses displayed on his equipment. The list is preferably dynamically updated as soon as the user spells or types the first letter of the requested name, and when the recognizer 7 computes new possible hypotheses. In yet another embodiment, the user could type, speak or enter a DTMF code corresponding to the selected option in a displayed or spoken menu.

In order to increase the usability of the system, recognition of the spelled letters is preferably performed locally in the user's equipment 1 whereas the more complex recognition of complete names is preferably performed in the remote platform 2. A local recognition permits a faster feedback and in any case a speaker-dependant recognition algorithm.

Optionally, when the confidence level 71 is very low, or after the user has been asked more than a predetermined number of times to spell various queries, a second fallback option may be chosen, for instance a human fallback. This reduces the risk of a user having to spell all or most names during the dialogue.

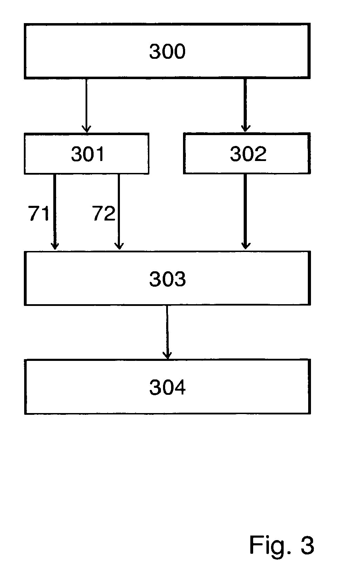

We will now describe with Fig. 3 an embodiment of the method used in the invention to determine the threshold T used by the comparing means 9. As already mentioned, the whole process of Fig. 3 is preferably performed offline, preferably even before the first information requests are received by the platform 2. However, this process can be repeated periodically, or at need, or with online speech data, for a continuous tuning of the threshold to possibly varying conditions or requirements.

During step 300, speech data is collected offline, preferably over the service access lines. This speech material is expected to be representative of the application, and contains similar queries/names uttered by a similar set of users 1 and transmitted over a similar telephone network.

This material is automatically or manually transcribed during step 302, i.e. converted to text by a recognition system more reliable than the recognizer 7, preferably by a human operator listening to the collected speech data and comparing them with the results of the recognizer.

During step 301, the recognizer 301 is run over the collected speech data, which delivers hypotheses 72 and metrics 71 (for example a confidence level) for each recognized name. The false acceptance rate is then measured during step 303 by comparing the hypotheses 72 with the output of the more reliable recognition system delivered during step 302.

In an embodiment, a table is built during step 302 for various thresholds of confidence level to determine the number of false acceptance. Typical values could be, for a confidence level > 70%, one third of the recognized names are directly recognized and the false acceptance rate is of 4.5% (the wrong name is recognized with a confidence measure >70%). In the case of a confidence value > 60%, two thirds of the names are recognized directly, but the false acceptance rate is of 12%.

During step 304, a trade-off is automatically found from the table to determine the optimal threshold T that determines the launch of the fallback system. A way to do this is to define a final success rate of the overall dialogue of, for instance, 85%. Then, considering that the fallback system is almost perfect (99% success rate in the case of a spelling recognizer, even more in the case of a multimodal fallback system), the false acceptance measure is used to define the confidence threshold.

The result of this procedure is a threshold value T with which an optimal dialogue is constructed that allows the usability aspects of the automatic directory assistance or any address delivery system to be maximized. In other words, the success rate could be selected to reach 99% (spelling only), however the ideal dialogue uses a trade-off between too many spelling dialogue turns and the expected dialogue success rate.

The tuning of the confidence threshold is automatically updated when the performance of the recognizer increases. In case of an adaptive speech recognizer, the confidence threshold is also adapted accordingly.

As already mentioned, the threshold T could be further adapted depending on the quality of the phone communication line, or given any user preference setting or user specificity when user statistics are known by the system. In the latter case, when the user call statistics are known, the confidence threshold could be lowered. Different users may have different expectations regarding usability and success-rate; for example, beginners are likely to be more willing to accept a spelling turn. Therefore, in an embodiment, individual thresholds T are set for users or for statistically defined groups of users.

The confidence level also depends on the recognisability of each name; short names are usually harder to recognize than longer, more distinctive names. On the other hand, it is more annoying and difficult to spell or type a long name than a short one. In an embodiment, different thresholds T are defined for the different names in the lexica 70. Possibly, the fallback threshold depends on the number of phonems in each name in the lexica 70. More generally, the fallback threshold set for each name preferably depends on the proximity of the name in said lexica to acoustically close names. In particular, a very high threshold T is preferably set for names having homophones in the lexica ("Schmitt" and "Schmidt"), in order to force the speaker to spell those names. The threshold is preferably dynamically lowered as soon as a homophone as been excluded during the dialogue (for example when first distinctive letters have been spelled).

In a directory system, the threshold T could also depend on the probability to have a name, for example a town name, being requested; addresses in big cities are more likely to be requested than in smaller towns where a spelling confirmation could be more often requested.

The fallback threshold T can also depend on so-called *priors,* i.e. a priori knowledge about the speaker, the spoken queries, etc., gained for example from previous dialogue elements, from the recognised identity of the speaker, etc. In an embodiment, the threshold T depends on the location of the user; a user located in Lausanne is much more likely to request an address in Lausanne than in the smaller, remote city of Lausen. The threshold T could also depend on the type of equipment used by the user 1; it would be appropriate to have a smaller threshold for mobile phone users than for users of fixed equipments that deliver a higher quality audio.

The threshold T can also depend on the context, including for example previous dialogue turns. For example, if the user requests a phone number for a name in a city that is not in the directory database 15, the dialogue manager 13 will lower the threshold T and request spelling or typing of either the user or city name.

The threshold T preferably also depends on previously determined confidence levels, and could be lowered for calls or users that systematically reach low confidence levels. This would allow to automatically increase the usability of the platform 2 for users of lower quality equipments or users with an accent who would otherwise be requested to spell or type too many queries.

In some existing systems, the usual way to get the N-Best solutions of the recognizer 7 is to do it in one pass and to compute effectively these N-Best paths. The drawback of this approach is that the decoder is complex (slow) and the results are often poor: only small variations are delivered by the N-Best.

In an embodiment, in order to optimize the recognition speed, the following procedures are executed in the recognizer 7:
1. A simple decoder is run without any N-Best output. The first recognition result is therefore delivered faster than a normal N-Best algorithm.
2. The first solution is directly given to the dialogue manager 13 that proposes it to the user 1; during that interaction time, a second instance of the simple decoder is launched as a background thread and with a new recognition network where the first output has been suppressed.
3. If the first recognition output is selected by the user as the correct one (for example with a stylus, with the keypad or with the voice), the dialogue stops. In the other case, the second output of the recognizer is proposed to the user.
4. The dialogue proceeds further, or not, in the list of possible items given the confidence measure or any other predefined setting.

In order to further speed up the procedure, in some cases the recognition networks (with one left item) could be pre-compiled in advance.

In the case of a multi-modal interface, the first recognition output is displayed first, and after a short time the subsequent addresses (N-Best) are monitored. As soon as the user selects one item in the list, the above-described procedure is stopped. When the searched item is not in the list, the user can start spelling the requested name, and the list is dynamically updated. The procedure is also stopped when all ambiguities have been removed by the spelling, i.e. when only one name remains in list of possible matches.

### Reference Numbers

- 1: User
- 100, 101: Steps of a method
- 2: Platform
- 200 - 203: Steps of a method
- 3: Interface
- 300 - 304: Steps of a method
- 5: Interface
- 7: Speech recognizer
- 70: Lexica
- 71: Metric
- 72: Hypothesis
- 9: Comparing means
- 11: Text-to-Speech converting System
- 13: Dialogue manager
- 15: Directory database
- v: Voice communication
- d: Data communication
- T: Threshold

## Claims

1. A method used in a speech-enabled automatic directory system (2)
wherein a fallback decision is taken by said directory system when a metric (71) delivered by a speech recognition system (7) has a predefined relation to said fallback threshold (T),
said method being **characterized by** a determination of said fallback threshold (T) comprising the steps of:
collecting speech data (300) corresponding to names uttered by users,
running said speech recognition system (7) over this speech data (301)
determining the false acceptance rate for various fallback thresholds (T) of said metric (71) delivered by said speech recognition system (7) (303),
determining an adequate fallback threshold based on said false acceptance rate (304),
automatic adaptation of said fallback threshold when the performance of the recognizer increases.

2. The method of claim 1, wherein said metric (71) is a confidence level delivered by said speech recognition system (7).

3. The method of claim 2, wherein said confidence level is based on the match between the utterance and the model of the hypothesis output by said speech recognition system (7).

4. The method of one of the claims 1 to 3, wherein said fallback threshold (T) is determined by finding a trade-off with said false acceptance rate.

5. The method of claim 4, wherein said trade-off is found by choosing the false acceptance rate with which a required recognition rate of the overall dialogue can be reached.

6. The method of one of the claims 1 to 5,
wherein said speech data is collected off-line,
wherein said speech recognition system is run off-line,
wherein said false acceptance rate is determined by comparing the hypothesis output by said speech recognition system with the output of a more reliable recognition system,
and wherein said fall-back threshold is tuned during the initialisation of said speech-enabled automatic directory system.

7. The method of claim 6, wherein said false acceptance rate is determined by comparing the hypothesis output by said speech recognition system (7) with the hypothesis or knowledge of human operators (302).

8. The method of one of the claims 1 to 7, further comprising a step of comparing said metric (71) with said fallback threshold (T) for deciding if spelling of a name uttered by a user (1) and analysed by said speech recognition system (7) is required.

9. The method of one of the claims 1 to 8, further comprising a step of comparing said metric (71) with said fallback threshold (T) for deciding if a multimodal interaction with the user (1) is required.

10. The method of claim 9, further comprising a step during which said user (1) types at least the first letters of names when a fallback decision has been taken.

11. The method of one of the claims 1 to 9, further comprising a step during which said user (1) spells at least the first letters of names when a fallback decision has been taken.

12. The method of claim 11, wherein the spelled letters are displayed on the display of the user's equipment (1).

13. The method of one of the claims 10 to 12, further comprising a step of displaying to said user (1) a list of hypotheses matching the typed or spelled letters.

14. The method of one of the claims 10 to 13, further comprising a step during which said user (1) selects a name in a list of hypotheses delivered by said speech recognition system (7) when a fallback decision has been taken.

15. The method of claim 14, wherein said list of hypotheses is dynamically updated when the user types or spells the names.

16. The method of one of the claims 14 to 15, wherein said list is spoken to said user (1), and wherein said selection is entered by a voice or DTMF command.

17. The method of one of the claims 14 to 16, wherein said list is displayed to said user (1), and wherein said selection is entered on a keypad or with a stylus.

18. The method of one of the claims 1 to 17, wherein a different fallback threshold (T) is set for different names in the lexica (70) of words recognised by said speech recognition system (7).

19. The method of claim 18, wherein said fallback threshold (T) depends on the recognisability of each name in said lexica (70).

20. The method of one of the claims 18 to 19, wherein said fallback threshold (T) depends on the number of phonems in each name in said lexica (70).

21. The method of one of the claims 1 to 20, wherein said fallback threshold (T) depends on at least one prior.

22. The method of claim 21, wherein said fallback threshold depends on the location of said user (1).

23. The method of one of the claims 1 to 22, wherein said fallback threshold depends on the type of equipment used by said user (1).

24. The method of one of the claims 1 to 23, wherein said fallback threshold (T) set for each name depends on the context.

25. The method of one of the claims 18 to 24, wherein said fallback threshold (T) set for each name depends on metrics (71) previously determined during the same dialogue.

26. The method of one of the claims 18 to 25, wherein said fallback threshold (T) set for each name depends on the proximity of the name in said lexica (70) to acoustically close names.

27. The method of claim 26, wherein a higher threshold (T) is set for names having a homophone in said lexica.

28. The method of one of the claims 1 to 27, wherein different fallback thresholds (T) are determined for various users or groups of users (1).

29. The method of one of the claims 1 to 28, wherein said speech recognition system (7) uses a plurality of support vectors associated with each name in said lexica,
and wherein said metric (71) is based on a discriminant function of each uttered name and of each associated support vector.

30. The method of one of the claims 1 to 29, wherein said speech recognition includes the following steps:
running a fast speech recognition system for delivering a first hypothesis (72),
proposing said output to said user (1), and during that interaction time launching at least a second instance of said speech recognition system (7) with a new recognition network where said first hypothesis has been suppressed in order to find a second-best hypothesis.

31. The method of claim 30, further comprising a step of stopping the dialogue with said user (1) when said hypothesis (72) is accepted or not rejected by said user (1).

32. The method of one of the claims 30 to 31, further comprising a step of proposing at least said second-best recognition output to said user (1) when said hypothesis is rejected by said user (1).

33. A computer program product comprising computer code portions for executing the method of any of the preceding claims when said computer code is run by a computer.

## Patentansprüche

1. Ein Verfahren, welches in einem sprachgesteuerten automatischen Verzeichnissystem (2) verwendet wird,
in welchem eine Rückfallentscheidung durch besagtes Verzeichnis getroffen wird, wenn eine Metrik (71), die von einen Spracherkennungssystem (7) geliefert wird, eine vordefinierte Beziehung zu besagter Rückfallschwelle (T) hat,
besagtes Verfahren ist **gekennzeichnet durch** eine Bestimmung von besagter Rückfallschwelle (T) umfassend die Schritte
Sammeln von Sprachdaten (300), die Namen entsprechen, die von Benutzern ausgesprochen werden,
Ablaufen besagten Spracherkennungssystems (7) über die Sprachdaten (301),
Bestimmen der falschen Akzeptanzrate für verschiedene Rückfallschwellen (T) von besagter Metrik (71), die von einen Spracherkennungssystem (7) geliefert wird (303),
Bestimmen einer adäquaten Rückfallschwelle basierend auf besagter falschen Akzeptanzrate (304),
automatische Anpassung von gesagter Rückfallschwelle, wenn die Leistung von dem Erkennungssystem erhöht wird.

2. Das Verfahren gemäss Anspruch 1, in welchem besagte Metrik (71) ein Vertraulichkeitslevel ist, der durch besagtes Spracherkennungssystem (7) geliefert wird.

3. Das Verfahren gemäss Anspruch 2, in welchem besagter Vertraulichkeitslevel auf einem Treffer zwischen der Äusserung und dem Modell des Hypothesenausgangs durch besagtes Spracherkennungssystem (7) basiert.

4. Das Verfahren gemäss einem der Ansprüche 1 bis 3, in welchem besagte Rückfallschwelle (T) durch einen Kompromiss mit besagter falscher Akzeptanzrate bestimmt wird.

5. Das Verfahren gemäss Anspruch 4, in welchem besagter Kompromiss gefunden wird, in dem die falsche Akzeptanzrate gewählt wird, mit welcher eine benötigte Erkennungsrate des gesamten Dialogs erreicht werden kann.

6. Das Verfahren gemäss einem der Ansprüche 1 bis 5,
in welchem besagte Sprachdaten offline gesammelt werden,
in welchem besagtes Spracherkennungssystem offline abläuft,
in welchem besagte falsche Akzeptanzrate bestimmt wird, in dem der Hypothesenausgang durch besagtes Spracherkennungssystem mit dem Ausgang von einem verlässlichen System verglichen wird,
und in welchem besagte Rückfallschwelle während der Initialisierung von besagtem sprachgesteuerten automatischen Verzeichnissystem bestimmt wird.

7. Das Verfahren gemäss Anspruch 6, in welchem besagte falsche Akzeptanzrate bestimmt wird, in dem der Hypothesenausgang durch besagtes Spracherkennungssystem (7) mit der Hypothese oder dem Wissen von menschlichen Operatoren verglichen wird (302).

8. Das Verfahren gemäss einem der Ansprüche 1 bis 7, weiter umfassend einen Schritt des Vergleichens von besagter Metrik (71) mit besagter Rückfallschwelle (T), um zu entscheiden, ob das Buchstabieren eines Namens, der von einem Benutzer (1) geäussert und durch besagtes Spracherkennungssystem (7) analysiert wird, benötigt wird.

9. Das Verfahren gemäss einem der Ansprüche 1 bis 8, weiter umfassend einen Schritt des Vergleichens von besagter Metrik (71) mit besagter Rückfallschwelle (T), um zu entscheiden, ob eine multimodale Interaktion mit dem Benutzer (1) benötigt wird.

10. Das Verfahren gemäss Anspruch 9, weiter umfassend einen Schritt während welchem besagter Benutzer (1) mindestens die ersten Buchstaben tippt, wenn eine Rückfallentscheidung gefällt wurde.

11. Das Verfahren gemäss einem der Ansprüche 1 bis 9, weiter umfassend einen Schritt während welchem besagter Benutzer (1) mindestens die ersten Buchstaben des Namens buchstabiert, wenn eine Rückfallentscheidung gefällt wurde.

12. Das Verfahren gemäss Anspruch 11, in welchem die buchstabierten Buchstaben auf der Anzeige des Benutzergeräts (1) angezeigt werden.

13. Das Verfahren gemäss einem der Ansprüche 10 bis 12, weiter umfassend einen Schritt von Anzeigen zu besagten Benutzer (1) eine Liste von Hypothesen, die den getippten oder buchstabierten Buchstaben entsprechen.

14. Das Verfahren gemäss einem der Ansprüche 10 bis 13, in welchem weiter umfassend einen Schritt während welchem besagter Benutzer (1) einen Namen in einer Liste von Hypothesen, die durch besagtes Spracherkennungssystem (7) geliefert werden, wenn eine Rückfallentscheidung gefällt wurde, auswählt.

15. Das Verfahren gemäss Anspruch 14, in welchem besagte Liste von Hypothesen dynamisch erneuert wird, wenn der Benutzer die Namen tippt oder buchstabiert.

16. Das Verfahren gemäss einem der Ansprüche 14 bis 15, in welchem besagte Liste zu besagtem Benutzer (1) gesprochen wird, und in welchem besagte Auswahl durch einen Sprach oder DTMF Befehl eingegeben wird.

17. Das Verfahren gemäss einem der Ansprüche 14 bis 16, in welchem besagte Liste dem besagtem Benutzer (1) angezeigt wird, und in welchem besagte Auswahl auf einer Tastatur oder mit einem Schreiber eingegeben wird.

18. Das Verfahren gemäss einem der Ansprüche 1 bis 17, in welchem eine verschiedene Rückfallschwelle für verschiedene Namen in dem Wörterlexika (70), die durch besagtes Spracherkennungssystem (7) erkannt werden, gesetzt werden.

19. Das Verfahren gemäss Anspruch 18, in welchem besagte Rückfallschwelle (T) von der Erkennbarkeit von jedem Namen in besagtem Lexika (70) abhängt.

20. Das Verfahren gemäss einem der Ansprüche 18 bis 19, in welchem besagte Rückfallschwelle (T) von der Anzahl der Phoneme in jedem Namen in besagtem Lexika (70) abhängt.

21. Das Verfahren gemäss einem der Ansprüche 1 bis 20, in welchem in welchem besagte Rückfallschwelle (T) von mindestens einem Vorwissen abhängt.

22. Das Verfahren gemäss einem der Ansprüche 1 bis 22, in welchem besagte Rückfallschwelle (T) von dem Ort des Benutzers (1) abhängt.

23. Das Verfahren gemäss einem der Ansprüche 1 bis 22, in welchem besagte Rückfallschwelle (T) von dem Typ des Geräts, das von dem besagtem Benutzer (1) verwendet wird, abhängt.

24. Das Verfahren gemäss einem der Ansprüche 1 bis 23, in welchem besagte Rückfallschwelle (T), die für jeden Namen gesetzt wird, von dem Kontext abhängen.

25. Das Verfahren gemäss einem der Ansprüche 18 bis 24, in welchem besagte Rückfallschwelle (T), die für jeden Namen gesetzt wird, von Metriken (71) abhängen, die vorher während desselben Dialoges bestimmt wurden.

26. Das Verfahren gemäss einem der Ansprüche 18 bis 25, in welchem besagte Rückfallschwelle (T), die für jeden Namen gesetzt wird, von der Nähe des Namens in besagtem Lexika (70) zu akustisch verwandten Namen abhängen.

27. Das Verfahren gemäss Anspruch 26, in welchen eine höhere Schwelle (T) für Namen gesetzt wird, die ein Homophon in besagten Lexika haben.

28. Das Verfahren gemäss einem der Ansprüche 1 bis 27, in welchem verschiedene Rückfallschwellen (T) für verschiedene Benutzer oder Gruppen von Benutzer (1) bestimmt werden.

29. Das Verfahren gemäss einem der Ansprüche 1 bis 28, in welchem besagtes Spracherkennungssystems (7) eine Vielzahl von Unterstützungsvektoren verwendet, die jeden Namen in besagten Lexika assoziieren,
und in welchem besagte Metrik (71) auf einer diskriminierenden Funktion von jedem gesprochenen Namen und von jedem assoziierten Unterstützungsvektor basiert.

30. Das Verfahren gemäss einem der Ansprüche 1 bis 29, in welchen besagte Spracherkennung folgende Schritte umfasst
Abspielen eines schnellen Spracherkennungsystems, um eine erste Hypothese (72) bereitzustellen,
Vorschlagen des besagten Ausgangs an den besagten Benutzer (1) und Starten während dieser Interaktionszeit mindestens eine zweite Instanz von des Spracherkennungssystems (7) mit einem neuen Erkennungsnetzwerk, in welchem besagte Hypothese unterdrückt wird, um eine zweibeste Hypothese zu finden.

31. Das Verfahren gemäss Anspruch 30, weiter umfassend einen Schritt des Anhaltens des Dialogs mit besagtem Benutzer (1), wenn besagte Hypothese (72) akzeptiert wird oder nicht durch besagten Benutzer (1) zurückgewiesen wird.

32. Das Verfahren gemäss einem der Ansprüche 30 oder 31, weiter umfassend einen Schritt, um mindestens besagten zweitbesten Erkennungsausgang besagtem Benutzer (1) vorzuschlagen, wenn besagte Hypothese durch besagten Benutzer (1) zurückgewiesen wird.

33. Ein Computerprogramprodukt umfassend Computercodeteile, um das Verfahren irgendeiner der Ansprüche auszuführen, wenn besagter Computercode auf dem Computer abgespielt wird.

## Revendications

1. Procédé mis en oeuvre dans un système d'annuaire automatique actionné par la parole (2)
dans lequel une décision de repli est prise par ledit système d'annuaire lorsqu'une métrique (71) fournie par un système de reconnaissance vocale (7) possède une relation prédéfinie avec ledit seuil de repli (T),
ledit procédé étant **caractérisé par** la détermination dudit seuil de repli (T), comprenant les étapes de:
collecter des données vocales (300) correspondant à des noms prononcés par les utilisateurs,
exécuter ledit système de reconnaissance vocale (7) sur ces données vocales (301),
déterminer le taux de fausses acceptations pour les différents seuils de repli (T) de ladite métrique (71) fournie par le système de reconnaissance vocale (7) (303),
déterminer un seuil de repli approprié sur la base dudit taux de fausses acceptations (304),
adapter automatiquement ledit seuil de repli lorsque la performance du reconnaisseur augmente.

2. Le procédé de la revendication 1, dans lequel ladite métrique (71) est un niveau de confiance fourni par ledit système de reconnaissance vocale (7).

3. Le procédé de la revendication 2, dans lequel ledit niveau de confiance est basé sur la concordance entre le prononcé et le modèle de l'hypothèse fourni par ledit système de reconnaissance vocale (7).

4. Le procédé de l'une des revendications 1 à 3, dans lequel ledit seuil de repli (T) est déterminé en trouvant un compromis avec ledit taux de fausses acceptations.

5. Le procédé de la revendication 4, dans lequel ledit compromis est trouvé en choisissant le taux de fausses acceptations avec lequel le taux de reconnaissance requis pour l'ensemble du dialogue peut être atteint.

6. Le procédé de l'une des revendications 1 à 5,
dans lequel lesdites données vocales sont collectées hors ligne,
dans lequel ledit système de reconnaissance vocale est exécuté hors ligne,
dans lequel ledit taux de fausses acceptations est déterminé en comparant les hypothèses fournies par ledit système de reconnaissance vocale avec la production d'un système de reconnaissance plus fiable,
et dans lequel ledit seuil de repli est ajusté pendant l'initialisation dudit système d'annuaire automatique actionné par la parole.

7. Le procédé de la revendication 6, dans lequel ledit taux de fausses acceptations est déterminé en comparant l'hypothèse fournie par ledit système de reconnaissance vocale (7) avec l'hypothèse ou la connaissance d'opérateurs humains (302).

8. Le procédé de l'une des revendications 1 à 7, comprenant en outre une étape de comparaison de ladite métrique (71) avec ledit seuil de repli (T) pour décider si l'épellation d'un nom prononcé par un utilisateur (1) et analysé par ledit système de reconnaissance vocale (7) est requise.

9. Le procédé de l'une des revendications 1 à 8, comprenant en outre une étape de comparaison de ladite métrique (7) avec ledit seuil de repli (T) pour décider si une interaction multimodale avec l'utilisateur (1) est requise.

10. Le procédé de la revendication 9, comprenant en outre une étape durant laquelle ledit utilisateur (1) tape au moins les premières lettres de noms lorsqu'une décision de repli a été prise.

11. Le procédé de l'une des revendications 1 à 9, comprenant en outre une étape durant laquelle ledit utilisateur (1) épelle au moins les premières lettres de noms lorsqu'une décision de repli a été prise.

12. Le procédé de la revendication 11, dans lequel les lettres épelées sont affichées sur l'écran de l'équipement de l'utilisateur (1).

13. Le procédé de l'une des revendications 10 à 12, comprenant en outre une étape d'affichage audit utilisateur (1) d'une liste d'hypothèses correspondant aux lettres introduites manuellement ou épelées.

14. Le procédé de l'une des revendications 10 à 13, comprenant en outre une étape durant laquelle ledit utilisateur (1) sélectionne un nom dans une liste d'hypothèses fournies par ledit système de reconnaissance vocale (7) lorsqu'une décision de repli a été prise.

15. Le procédé de la revendication 14, dans lequel ladite liste d'hypothèses est mise à jour de façon dynamique lorsque l'utilisateur introduit manuellement ou épelle les noms.

16. Le procédé de l'une des revendications 14 à 15, dans lequel ladite liste est prononcée audit utilisateur (1), et dans lequel ladite sélection est introduite par une commande vocale ou à multifréquence bitonale (DTMF).

17. Le procédé de l'une des revendications 14 à 16, dans lequel ladite liste est affichée audit utilisateur (1), et dans lequel ladite sélection est introduite sur un clavier ou avec un stylet.

18. Le procédé de l'une des revendications 1 à 17, dans lequel un différent seuil de repli (T) est établi pour différents noms dans les lexiques (70) de mots reconnus par ledit système de reconnaissance vocale (7).

19. Le procédé de la revendication 18, dans lequel ledit seuil de repli (T) dépend de l'identifiabilité de chaque nom dans lesdits lexiques (70).

20. Le procédé de l'une des revendications 18 à 19, dans lequel ledit seuil de repli (T) dépend du nombre de phonèmes dans chaque nom dans lesdits lexiques (70).

21. Le procédé de l'une des revendications 1 à 20, dans lequel ledit seuil de repli (T) dépend d'au moins un a priori.

22. Le procédé de la revendication 21, dans lequel ledit seuil de repli dépend de l'emplacement dudit utilisateur (1).

23. Le procédé de l'une des revendications 1 à 22, dans lequel ledit seuil de repli dépend du type d'équipement utilisé par ledit utilisateur (1).

24. Le procédé de l'une des revendications 1 à 23, dans lequel ledit seuil de repli (T) établi pour chaque nom dépend du contexte.

25. Le procédé de l'une des revendications 18 à 24, dans lequel ledit seuil de repli (T) établi pour chaque nom dépend des métriques (71) préalablement déterminées au cours du même dialogue.

26. Le procédé de l'une des revendications 18 à 25, dans lequel ledit seuil de repli (T) établi pour chaque nom dépend de la proximité du nom dans lesdits lexiques (70) avec des noms acoustiquement similaires.

27. Le procédé de la revendication 26, dans lequel un seuil (T) plus élevé est établi pour des noms ayant un homophone dans lesdits lexiques.

28. Le procédé de l'une des revendications 1 à 27, dans lequel différents seuils de repli (T) sont déterminés pour différents utilisateurs ou groupes d'utilisateurs (1).

29. Le procédé de l'une des revendications 1 à 28, dans lequel ledit système de reconnaissance vocale (7) utilise une pluralité de vecteurs supports associés à chaque nom dans lesdits lexiques,
et dans lequel ladite métrique (71) est basée sur une fonction discriminatoire de chaque nom prononcé et de chaque vecteur support associé.

30. Le procédé de l'une des revendications 1 à 29, dans lequel ladite reconnaissance vocale comprend les étapes suivantes:
exécuter un système de reconnaissance vocale rapide pour fournir une première hypothèse (72),
proposer ledit résultat audit utilisateur (1) et, pendant la durée de l'interaction, lancer au moins une deuxième occurrence dudit système de reconnaissance vocale (7) avec un nouveau réseau de reconnaissance où ladite première hypothèse a été supprimée afin de trouver la deuxième meilleure hypothèse.

31. Le procédé de la revendication 30, comprenant en outre une étape d'arrêt du dialogue avec ledit utilisateur (1) lorsque ladite hypothèse (72) est acceptée ou non rejetée par ledit utilisateur (1).

32. Le procédé de l'une des revendications 30 à 31, comprenant en outre une étape de proposer au moins un deuxième meilleure résultat pour la reconnaissance audit utilisateur (1) lorsque ladite hypothèse est rejetée par ledit utilisateur (1).

33. Un produit logiciel informatique comprenant des portions de code informatique pour exécuter le procédé de n'importe laquelle des revendications précédentes lorsque ledit code informatique est exécuté par un ordinateur.
